# EUROPÄISCHE PATENTSCHRIFT

(11) **EP 0 401 496 B1**
(45) Veröffentlichungstag und Bekanntmachung des Hinweises auf die Patenterteilung: **16.03.1994**
(21) Anmeldenummer: 90107212.4
(22) Anmeldetag: 14.04.1990
(51) Int. Cl.: C08F 8/42

(54) **Verfahren zur Herstellung von wässrigen, siliciummodifizierten Kunststoffdispersionen und ihre Verwendung**
Process for the manufacture of aqueous silicon modified dispersions of plastics and use thereof
Procédé de préparation de dispersions aqueuses de matières plastiques modifiées de silice et leur application

(30) Priorität: 08.06.1989 DE 3918704
(43) Veröffentlichungstag der Anmeldung: 12.12.1990
(73) Patentinhaber: HÜLS AKTIENGESELLSCHAFT, 45764 Marl (DE)
(72) Erfinder: Hahn, Karl, Dr., D-4370 Marl 6 (DE); Dören, Klaus, Dr., D-4370 Marl (DE)

(56) Entgegenhaltungen:
- EP-A- 0 173 278
- EP-A- 0 214 696
- EP-A- 0 215 518
- EP-A- 0 292 155
- US-A- 4 160 750

## Beschreibung

Auf dem Gebiet der Bauklebmassen hat es zwei parallele Entwicklungen gegeben.
1) Zementhaltige, hydraulisch erhärtende Dünnbettmörtel wurden durch den Zusatz einer wäßrigen Kunststoffdispersion modifiziert. Die damit erhaltenen Verklebungen zeichnen sich durch eine erhöhte Wasserfestigkeit, eine hinreichende Naßhaftzugfestigkeit und durch einen geringen Grad an Elastizität aus. Die eingesetzte Kunststoffdispersion weist Carbonsäure-, Carbonsäureamid- und Sulfonsäuregruppen auf. Sie ist nicht siliciummodifiziert. Sie weist eine geringe pH-Empfindlichkeit der Viskosität auf, d.h. sie ist hinreichend viskositätsstabil. Sie ist selbstverständlich zementverträglich. Eine typische Klebmasse enthält 780 Massen-% Zement, bezogen auf den Feststoff der Kunststoffdispersion. Bei der Herstellung der einsatzbereiten Klebmasse geht man in der Weise vor, daß man unmittelbar vor der Weiterverarbeitung auf vergleichsweise umständliche Weise Zement, Zuschlagstoff, übliche Hilfsmittel, Wasser und die wäßrige Kunststoffdispersion mischt (EP-A-0 095 695).
2) Zementfreie Dünnbettmörtel wurden aus einer wäßrigen, siliciummodifizierten Kunststoffdispersion als Bindemittel, einem Zuschlagstoff und üblichen Hilfsmitteln hergestellt (DE-A-21 48 456 und 21 48 458; EP-A-0 035 332; neuerdings EP-A-0 214 696, 0 215 518 und 0 292 155). Sie werden so wie sie im Gebinde an der Baustelle angeliefert werden direkt weiterverarbeitet, d.h. sie bedürfen nicht des Zumischens weiterer Komponenten. Sie werden daher als Einkomponentendispersionskleber bezeichnet. Mit diesen Klebmassen können die verschiedensten Materialien, d.h. sowohl anorganische als auch organische Materialien, verklebt werden. Dabei ist es lediglich notwendig, daß zumindest der Untergrund oder das zu verklebende Material saugfähig ist. Die Verklebungen weisen eine hinreichende Naßhaftzugfestigkeit auf. Als hinreichend gelten in Anlehnung an DIN 18 156 erhaltene Prüfwerte von wenigstens 0,5 N/mm².

Die Kunststoffdispersionen und Klebmassen der im vorstehenden Absatz geschilderten, zweiten Entwicklung entsprechen nicht immer den Anforderungen der Praxis. Die pH-Empfindlichkeit der Viskosität der Kunststoffdispersion ist in manchen Fällen zu hoch, d.h. die Viskositätsstabilität ist in manchen Fällen unzureichend. Die mit der Klebmasse erhaltene Verklebung zeigt nicht immer eine hinreichend schnelle Durchtrocknung. Das hat zur Folge, daß beispielsweise beim Verkleben von keramischen Bodenfliesen auf einem saugenden Untergrund der Bodenbelag erst nach einer verhältnismäßig langen Wartezeit begangen werden kann.

Die Aufgabe der Erfindung bestand darin, wäßrige Kunststoffdispersionen bereitzustellen, mit welchen die geschilderten Mängel überwunden werden.

Die Aufgabe wurde wie in den Patentansprüchen angegeben gelöst. Darin wird die EP-A-0 214 696 als nächstliegender Stand der Technik berücksichtigt. Die nach dem Verfahren des Patentanspruchs 1 erhaltenen Dispersionen sind hinreichend viskositätsstabil und darüber hinaus zementverträglich. Sie können wahlweise und den jeweiligen Bedürfnissen entsprechend in zementfreien oder zementhaltigen Klebmassen entsprechend Patentanspruch 2 eingesetzt werden.

Die Emulsionspolymerisation von olefinisch ungesättigten Monomeren ist grundsätzlich bekannt. Als olefinisch ungesättigte Monomere können beispielsweise Styrol, 1,3-Butadien, (Meth)acrylsäure-(C₁- bis C₈-alkyl)ester, Vinylester, Vinylchlorid und Alkene eingesetzt werden. Die Polymerisation kann wie im Patentanspruch 2 der EP-B-0 070 355 in Verbindung mit der Beschreibung angegeben durchgeführt werden. Dabei werden ein Teil des Emulgators und ein Teil des Initiators im Reaktor vorgelegt und Monomer, der Rest des Emulgators und der Rest des Initiators im Verlauf der Polymerisation unter Berücksichtigung der zulässigen Füllhöhe des Reaktors zugegeben. Das Verfahren kann in der Weise abgewandelt werden, daß ein Teil oder die gesamte Menge der erfindungswesentlichen Comonomeren (Modifizierungskomponenten) in die Vorlage gegeben wird. Es ist auch möglich, den überwiegenden Teil der Modifizierungskomponenten in der Endphase der Polymerisation zuzudosieren.

Als α,β-olefinisch ungesättigte Carbonsäure können beispielsweise (Meth)acrylsäure, Fumarsäure und Itaconsäure eingesetzt werden.

Als Amid einer α,β-olefinisch ungesättigten Carbonsäure kann beispielsweise Acrylamid eingesetzt werden.

Als olefinisch ungesättigte Sulfonsäure können beispielsweise Vinylsulfonsäure, (Meth)allylsulfonsäure, Styrolsulfonsäure, Sulfoalkyl(meth)acrylate und 2-Acrylamido-2,2-dimethylethansulfonsäure oder deren Salze eingesetzt werden. Der Mengenberechnung ist die Sulfonsäure zugrundezulegen. In Betracht kommen auch Monomere, bei denen die Sulfonsäuregruppe Bestandteil einer Betain-Struktur ist, wie beispielsweise N-(3-Sulfopropyl)-N-(methacryloxyethyl)-N,N-dimethylammoniumbetain und N-(3-Sulfopropyl)-N-(methacrylamidopropyl)-N,N-dimethylammoniumbetain.

Neben den erfindungswesentlichen Modifizierungskomponenten können weitere Modifizierungskomponenten eingesetzt werden, wie beispielsweise Hydroxyalkyl(meth)acrylate, N-Hydroxymethyl(meth)acrylamid, N-iso-Butoxymethylacrylamid, Glycidylmethacrylat, Acrylnitril, Vinyltriethoxysilan, Methacryloxypropyl-trimethoxysilan, Divinylbenzol, Allylmethacrylat, Butandiol-1,4-diacrylat und Diallylphthalat.

Die Siliciummodifizierung der erhaltenen Kunststoffdispersionen durch Behandlung mit dem Epoxysilan gemäß Patentanspruch 1 ist grundsätzlich bekannt (siehe beispielsweise EP-A-0 214 696). Im allgemeinen geht man so vor, daß man das Epoxysilan zur Kunststoffdispersion gibt, welche eine Temperatur im Bereich von 10 bis 50 °C und einen pH-Wert im Bereich von 3 bis ≧ 7 aufweist. Vorteilhaft ist die Gegenwart eines Katalysators. Ein geeigneter Katalysator ist beispielsweise Tetrabutylammoniumjodid in einer Menge von 1 Massen-%, bezogen auf das Epoxysilan.

Geeignete Epoxysilane sind beispielsweise Glycidyloxyalkyl-trialkoxysilane, Glycidyloxyaryl-trialkoxysilane, Glycidyloxyalkyl-alkyl-dialkoxysilane, Glycidyloxyaryl-aryl-dialkoxysilane, Glycidyloxyaryl-alkyl-dialkoxysilane, Glycidyloxyalkyl-aryl-dialkoxysilane und β-(3,4-Epoxycyclohexyl)ethyl-trimethoxysilan. Bevorzugte Epoxysilane sind 3-Glycidyloxypropyl-trimethoxysilan, 3-Glycidyloxypropylmethyl-dimethoxysilan und 3-Glycidyloxypropyl-tris[β-(β′-methoxyethoxy)-ethoxy]silan.

Die Herstellung der zementfreien Klebmassen ist grundsätzlich bekannt (siehe beispielsweise EP-A-0 214 696). Man geht im allgemeinen so vor, daß man eine zementfreie Klebmasse, die durch Mischen der wäßrigen, siliciummodifizierten Kunststoffdispersion, eines Zuschlagstoffes, wie beispielsweise Quarzmehl, und üblicher Hilfsmittel hergestellt und im Gebinde an der Baustelle angeliefert ist, entweder direkt weiterverarbeitet oder mit Zement und gegebenenfalls wenig Wasser mischt und die so erhaltene zementhaltige Klebmasse unmittelbar weiterverarbeitet. Dabei entspricht die Zementmenge den Anforderungen hinsichtlich der Zeit zur Durchtrocknung der Verklebung. Die Verklebungen weisen eine hinreichende Naßhaftzugfestigkeit auf.

Die Erfindung wird durch die folgenden Beispiele erläutert. Das nicht erfindungsgemäße Vergleichsbeispiel wird mit A bezeichnet. Prozente (%) bedeuten Massenprozente und Teile (T.) Massenteile.

### Herstellung der Kunststoffdispersionen 1 und A

1. In Anlehnung an das Verfahren der EP-B-0 070 355, Patentanspruch 2, wurden 48 T. Styrol, 48, 6 T. n-Butylacrylat, 2,2 T. Acrylsäure, 1 T. Acrylamid und 0,2 T. 2-Acrylamido-2,2-dimethylethansulfonsäure in Gegenwart eines Emulgators, der durch Ethoxylierung von Nonylphenol mit 15 mol Ethylenoxid/mol Phenol und Sulfatierung erhalten worden war, polymerisiert. Die erhaltene Dispersion wurde bei 25 °C mit 0,55 T. 3-Glycidyloxypropyl-trimethoxysilan versetzt. Nach 2 Std. war die Reaktion beendet. Der pH-Wert wurde auf 8,5 eingestellt. Der Feststoffgehalt der erhaltenen Kunststoffdispersion 1 betrug 50 %. Die Viskosität wurde im Rotationsviskosimeter bei 25 °C gemessen. Die Viskosität einer auf pH ca. 10 eingestellten Probe wurde ebenfalls gemessen (Tabelle).
A. Wie im Beispiel 1 der EP-A-0 214 696 angegeben wurden 45 T. Styrol, 50 T. n-Butylacrylat und 5 T. Acrylsäure polymerisiert. Die erhaltene Dispersion wurde bei 25 °C mit 1,25 T. 3-Glycidyloxypropyl-trimethoxysilan versetzt. Nach 2 Std. war die Reaktion beendet. Der pH-Wert wurde auf 8,5 eingestellt. Der Feststoffgehalt der erhaltenen Kunststoffdispersion A betrug 50 %. Die Viskosität wurde wie oben gemessen. Die Viskosität einer auf pH ca. 10 eingestellten Probe wurde ebenfalls gemessen (Tabelle).

**Tabelle**

| Charakterisierung der Kunststoffdispersionen und der Klebmassen | | | | | |
|---|---|---|---|---|---|
| Beispiel | Dispersion | Viskosität der D. [mPa s] | | Naßhaftzugfestigkeit [N/m²] | |
| | | pH 8,5 | pH ca. 10 | ohne Zement 1) | mit Zement 2) |
| 1 | 1 | 821 | 945 | 0,73 | 0,58 |
| A | A | 4 400 | >10 000 | 0,69 | - 3) |

| | | | | | |
|---|---|---|---|---|---|
| 1) 28 Tage trocknen, 1 Tag unter Wasser | | | | | |
| 2) 28 Tage trocknen, 21 Tage unter Wasser | | | | | |
| 3) Die Klebmasse koagulierte wegen unzureichender Zementverträglichkeit der Kunststoffdispersion A. | | | | | |

### Herstellung der zementfreien Klebmassen 1 und A

Entsprechend der folgenden Rezeptur wurde eine Klebmasse hergestellt.

| | |
|---|---|
| Kunststoffdispersion 1 bzw. A (pH 8,5; Feststoffgehalt: 50 %) | 250 T. |
| Wasser | 47 T. |
| wäßrige Natronlauge (10 %ig) | 2 T. |
| wäßrige Lösung eines ethoxylierten | |
| C₁₂/C₁₄-Fettalkohols (17 mol Ethylenoxid/mol Fettalkohol, 25 %ig) | 4 T. |
| handelsübliches Konservierungsmittel | 2 T. |
| Testbenzin (Flammpunkt: 60 °C) | 10 T. |
| handelsüblicher Entschäumer | 2 T. |
| Kreide (mittlerer Durchmesser: 3 µm) | 130 T. |
| Quarzmehl (Gemisch aus 2 Typen mit den mittleren Durchmessern 27 und 63 µm) | 540 T. |
| Bentonit (Aluminiumschichtsilikat) | 8 T. |
| wäßrige Lösung einer Methylhydroxyethylcellulose (2 %ig, Viskositätsstufe 10 000) | 5 T. |
| | 1̅ 0̅0̅0̅ T̅.̅ |

### Herstellung der zementhaltigen Klebmassen 1z und Az

1 000 T. der zementfreien Klebmasse 1 bzw. A wurden mit 50 T. Portlandzement (PZ 35) gemischt. Die Klebmassen enthielten somit 40 T. Zement, bezogen auf 100 T. Feststoff der Kunststoffdispersion.

### Bestimmung der Naßhaftzugfestigkeit der Klebmassen

Die Naßhaftzugfestigkeit wurde mit keramischen Fliesen auf Betonplatten in Anlehnung an DIN 18 156 bestimmt (Tabelle).

Zusammenfassend ist festzustellen, daß die Kunststoffdispersion und die Klebmasssen der Erfindung die Anforderungen der Praxis hinsichtlich der Viskositätsstabilität bzw. Naßhaftzugfestigkeit voll erfüllen.

## Patentansprüche

1. Verfahren zur Herstellung von wäßrigen, siliciummodifizierten Kunststoffdispersionen durch Behandlung einer durch Emulsionspolymerisation von olefinisch ungesättigten Monomeren erhaltenen, carboxylierten, wäßrigen Kunststoffdispersion mit, bezogen auf das Polymerisat, 0,2 bis 3 Massen-% eines Epoxysilans der allgemeinen Formel 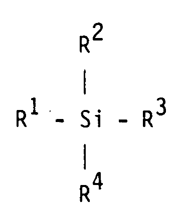 in welcher
R¹ einen, eine reaktive Oxirangruppe aufweisenden (Cyclo)alkylrest, der Ethergruppen und/oder einen aromatischen Rest aufweisen kann,
R² einen (Cyclo)alkoxyrest, der Ethergruppen aufweisen kann, einen (Cyclo)alkyl-, Aryl- oder Aralkylrest,
R³ und R⁴ unabhängig voneinander einen (Cyclo)alkoxyrest, der Ethergruppen aufweisen kann, oder einen Hydroxylrest bedeuten, dadurch gekennzeichnet,
daß bei der Emulsions polymerisation wenigstens 91 Massen-% eines olefinisch ungesättigten Monomers, das frei ist von Carbonsäure-, Carbonsäureamid- und Sulfonsäuregruppen oder von mehreren dieser Monomeren, 0,5 bis < 5 Massen-% mindestens einer α,ß-olefinisch ungesättigten Carbonsäure, 0,5 bis 3 Massen-% mindestens eines Amides einer solchen Säure und 0,1 bis < 1,8 Massen-% mindestens einer olefinisch ungesättigten Sulfonsäure, jeweils bezogen auf die gesamten Monomeren, eingesetzt werden.

2. Verwendung der nach Anspruch 1 erhaltenen Kunststoffdispersionen zur Herstellung von Klebmassen, welche, bezogen auf den Feststoff der Kunststoffdispersion, 0 bis 150, insbesondere 0 bis 100 Massen-% Zement enthalten.

## Claims

1. A process for producing aqueous silicon-modified polymer dispersions in which a carboxylated aqueous polymer dispersion obtained by emulsion polymerization of olefinically unsaturated monomers is treated with, based on the polymer, from 0.2 to 3% by mass of an epoxysilane of the general formula 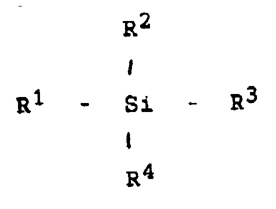 in which
R¹ is a (cyclo)alkyl radical which contains a reactive oxirane group and which may contain ether groups and/or an aromatic radical,
R² is a (cyclo)alkyl radical, which may contain ether groups, or a (cyclo)alkyl, aryl or aralkyl radical,
R³ and R⁴ are independently of one another a (cyclo)alkoxy radical, which may contain ether groups, or a hydroxyl radical,
characterised in that in the emulsion polymerization at least 91% by mass of an olefinically unsaturated monomer which is free from carboxyl, carboxamido and sulpho groups or of a plurality of these monomers, from 0.5 to < 5% by mass of at least one α,β-olefinically unsaturated carboxylic acid, from 0.5 to 3% by mass of at least one amide of such an acid and from 0.1 to < 1.8% by mass of at least one olefinically unsaturated sulphonic acid, in each case based on the total monomers, are used.

2. Use of the polymer dispersions obtained according to claim 1 for the production of adhesives which contain, based on the solids of the polymer dispersion, from 0 to 150, in particular from 0 to 100, % by mass of cement.

## Revendications

1. Procédé de préparation de dispersions aqueuses de matière synthétique modifiées au silicium, par traitement d'une dispersion aqueuse carboxylée de matière synthétique qui est obtenue par polymérisation en émulsion de monomères à insaturations oléfiniques, avec, relativement au produit de polymérisation, de 0,2 à 3 % en masse d'un époxy-silane de la formule générale 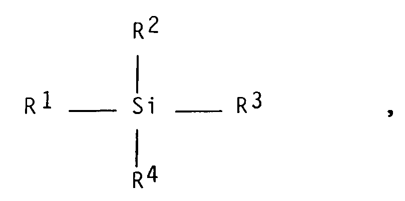 dans laquelle
R¹ représente un radical (cyclo)alkyle qui présente un groupe oxirane réactif et qui peut présenter des groupes éther et/ou un radical aromatique,
R² représente un radical (cyclo)alkoxy, qui peut présenter des groupes éther, un radical (cyclo)alkyle, aryle ou aralkyle,
R³ et R⁴ représentent, indépendamment l'un de l'autre, un radical (cyclo)alkoxy qui peut présenter des groupes éther, ou un radical hydroxyle,
caractérisé par le fait que lors de la polymérisation en émulsion, on utilise au moins 91 % en masse d'un monomère à insaturation oléfinique, qui est exempt de groupes carboxyle, carboxylamide et sulfoniques, ou de plusieurs de ces monomères, de 0,5 à moins de 5 % en masse au moins d'un acide carboxylique à insaturations alpha,bêta-oléfiniques, de 0,5 à 3 % en masse au moins d'une amide d'un tel acide et de 0,1 à moins de 1,8 % en masse au moins d'un acide sulfonique à insaturation oléfinique, rapporté chaque fois à la totalité des monomères.

2. L'utilisation des dispersions de substance synthétique obtenues selon la revendication 1 pour la préparation de masses adhésives qui, relativement à la substance solide de la dispersion de matière synthétique, renferment de zéro à 150, en particulier de zéro à 100 % en masse de ciment.
